(19) Europäisches Patentamt
European Patent Office
Office européen des brevets

(11) EP 2 731 242 A2

(12) EUROPEAN PATENT APPLICATION

(43) Date of publication:
14.05.2014 Bulletin 2014/20

(51) Int Cl.:
H02M 1/10 (2006.01)    H02M 7/539 (2006.01)

(21) Application number: 13188719.2

(22) Date of filing: 15.10.2013

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(30) Priority: 08.11.2012 JP 2012246751

(71) Applicant: Kabushiki Kaisha Yaskawa Denki
Kitakyushu-shi, Fukuoka 806-0004 (JP)

(72) Inventors:
• Fujisaki, Seiji
Kitakyushu-shi, Fukuoka 806-0004 (JP)
• Yamanaka, Katsutoshi
Kitakyushu-shi, Fukuoka 806-0004 (JP)

(74) Representative: Viering, Jentschura & Partner
Patent- und Rechtsanwälte
Grillparzerstrasse 14
81675 München (DE)

(54) **Current-source power converting apparatus**

(57)    A current-source power converting apparatus (1, 1A, 1B) includes: a converter unit (11, 11A, 11B) configured to convert an AC or DC voltage input from a power supply (2, 2A, 2B) into a predetermined DC voltage; an inverter unit (12, 12B) configured to convert a DC voltage supplied from the converter unit (11, 11A, 11B) via a DC reactor (13, 13A) into an AC voltage and output the AC voltage; and a controller (16, 16A, 16B) configured to control the inverter unit (12, 12B) at a modulation factor in correspondence with a step up/step down ratio based on a ratio of an output voltage from the inverter unit (12, 12B) to an input voltage from the power supply (2, 2A, 2B).

FIG. 1

**Description**

CROSS-REFERENCE TO RELATED APPLICATION

This application is based on Japanese Patent Application No. 2012-246751 filed with the Japan Patent Office on November 8, 2012, the entire content of which is hereby incorporated by reference.

BACKGROUND

1. TECHNICAL FIELD

Embodiments of the disclosure relate to a current-source power converting apparatus.

2. RELATED ART

Conventionally, a current-source power converting apparatus that supplies an electric motor with an AC power is known. The current-source power converting apparatus adjusts an amplitude of an AC voltage to be output from an inverter unit, for example, by adjusting an amount of DC voltage output from a converter unit. The DC voltage from the converter unit is adjusted by a modulation factor of the converter unit.

In a current-source power converting apparatus disclosed in JP-A-02-206385, for example, the maximum output voltage of an inverter unit is increased by providing the modulation factor of the inverter unit to be variable.

However, with the current-source power converting apparatus disclosed in this document, the modulation factor of the inverter unit is changed based on a DC voltage instruction to the converter unit. Thus, responsiveness of a voltage when an output voltage of the inverter unit is finely adjusted may be poor.

For example, if the modulation factor of the inverter unit is decreased, the output current momentarily decreases and then the output voltage decreases. Then, after a delay caused by a DC reactor, the DC current increases and then the output voltage increases. Thus, in the case where the modulation factor of the inverter unit is changed based on the DC voltage instruction, the responsiveness of the voltage may be poor.

An object of one aspect of the embodiments is to provide a current-source power converting apparatus with improved control responsiveness of an output voltage.

SUMMARY

A current-source power converting apparatus according to one aspect of the embodiments includes a converter unit, an inverter unit, and a controller. The converter unit converts an AC or DC voltage input from a power supply into a predetermined DC voltage. The inverter unit converts a DC voltage supplied from the converter unit via a DC reactor into an AC voltage and outputs the AC voltage. The controller controls the inverter unit at a modulation factor in correspondence with a step up/step down ratio based on a ratio of an output voltage from the inverter unit to an input voltage from the power supply.

BRIEF DESCRIPTION OF THE DRAWINGS

Fig. 1 illustrates a configuration of a current-source power converting apparatus according to a first embodiment;
Fig. 2 illustrates an exemplary relationship between an inverter modulation factor and a step up/step down ratio;
Fig. 3 illustrates an exemplary relationship between a converter modulation factor and the step up/step down ratio;
Fig. 4 illustrates another relationship between the inverter modulation factor and the step up/step down ratio;
Fig. 5 illustrates a configuration of a current-source power converting apparatus according to a second embodiment;
Fig. 6 illustrates a configuration of a current-source power converting apparatus according to a third embodiment;
Fig. 7 is an explanatory view of a PWM signal output during a power running operation; and
Fig. 8 is an explanatory view of a PWM signal output during a regeneration operation.

DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

Hereinafter, embodiments of a current-source power converting apparatus according to this disclosure will be described in detail with reference to the accompanying drawings. The current-source power converting apparatus according to this disclosure is not limited to the embodiments described below.

(First Embodiment)

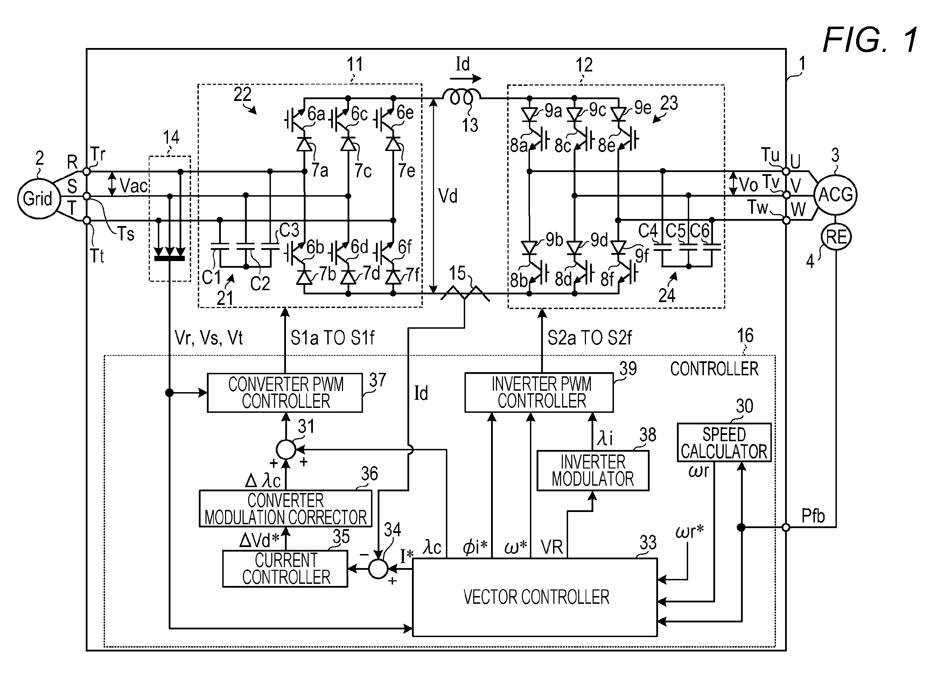

Fig. 1 illustrates a current-source power converting apparatus 1 according to a first embodiment. The current-source power converting apparatus 1 converts an AC power supplied from an AC power supply 2 into a desired AC power and outputs the AC power to an AC electric motor 3. The AC electric motor 3 is, for example, an induction electric motor or a synchronous electric motor.

As shown in Fig. 1, the current-source power converting apparatus 1 includes an R phase terminal Tr, an S phase terminal Ts, and a T phase-terminal Tt. These input terminals Tr, Ts, and Tt are respectively coupled to R phase, S phase, and T phase of the AC power supply 2. The current-source power converting apparatus 1 includes a U phase terminal Tu, a V phase terminal Tv, and a W phase terminal Tw. These output terminals Tu, Tv, and Tw are respectively coupled to U phase, V phase, and W phase of the AC electric motor 3.

Furthermore, the current-source power converting apparatus 1 includes a current-source converter unit 11, a current-source inverter unit 12, a DC reactor 13, a voltage detection unit 14, a current detection unit 15, and a controller 16.

The current-source converter unit 11 converts an AC power supplied from the AC power supply 2 into a DC power. The DC power is output to the current-source inverter unit 12 via the DC reactor 13. The current-source inverter unit 12 converts the DC power into the AC power and outputs the AC power to the AC electric motor 3. An output side voltage of the current-source converter unit 11 is a DC voltage Vd.

The current-source converter unit 11 includes a filter circuit 21 and a bridge circuit 22. The filter circuit 21 includes capacitors C1 to C3. One ends of the capacitors C1 to C3 are respectively coupled to the R phase terminal Tr, S phase terminal Ts, and T phase terminal Tt. The other ends of the capacitors C1 to C3 are coupled to one another.

The bridge circuit 22 includes a series circuit that includes switching elements 6a to 6f (hereinafter in some cases collectively referred to as switching elements 6) and diodes 7a to 7f (hereinafter in some cases collectively referred to as diodes 7). These series circuits are three-phase bridge coupled. The switching elements 6a to 6f are ON/OFF controlled by the controller 16. This converts a three-phase AC current output from the AC power supply 2 into a DC current.

The DC reactor 13 is coupled between the current-source converter unit 11 and the current-source inverter unit 12. The DC reactor 13 smoothes an electric current output from the current-source converter unit 11 and outputs the smoothed electric current to the current-source inverter unit 12.

The current-source inverter unit 12 includes a bridge circuit 23 and a filter circuit 24. The bridge circuit 23 includes a series circuit that includes switching elements 8a to 8f (hereinafter in some cases collectively referred to as switching elements 8) and diodes 9a to 9f (hereinafter in some cases collectively referred to as diodes 9). These series circuits are three-phase bridge coupled. Each of the switching elements 8a to 8f is ON/OFF controlled by the controller 16. This converts a DC current output from the DC reactor 13 into a three-phase AC current.

The filter circuit 24 includes capacitors C4 to C6. One ends of the capacitors C4 to C6 are respectively coupled to the U phase terminal Tu, V phase terminal Tv, and W phase terminal Tw. The other ends of the capacitors C4 to C6 are coupled to one another.

As the switching elements 6 and 8, for example, a semiconductor device such as an insulated gate bipolar transistor (IGBT) or a metal-oxide-semiconductor field-effect transistor (MOSFET) is used. In the case where the switching elements 6 and 8 are reverse blocking IGBT, the diodes 7 and 9 need not to be disposed.

The voltage detection unit 14 is disposed between the AC power supply 2 and the current-source converter unit 11. The voltage detection unit 14 detects voltages Vr, Vs, and Vt (hereinafter referred to as input voltages Vr, Vs, and Vt) of the R phase, the S phase, and the T phase of the AC power supply 2. The detection result is output to the controller 16.

The current detection unit 15 detects an electric current flowing from the DC reactor 13 to the current-source inverter unit 12 (hereinafter referred to as a DC current Id). The current detection unit 15 outputs the detection result to the controller 16. The current detection unit 15, for example, is a current sensor that detects an electric current using a Hall element, which is a magneto-electric converting device.

The controller 16 generates PWM signals S1a to S1f and outputs the PWM signals S1a to S1f to the current-source converter unit 11. The switching elements 6a to 6f of the current-source converter unit 11 are respectively ON/OFF controlled by the PWM signals S1a to S1f. The controller 16 generates PWM signals S2a to S2f and outputs the PWM signals S2a to S2f to the current-source inverter unit 12. The switching elements 8a to 8f of the current-source inverter unit 12 are respectively ON/OFF controlled by the PWM signals S2a to S2f.

Here, suppose that an input power to the current-source converter unit 11 and an output power from the current-source inverter unit 12 are equaled due to power balance. In this case, the following expression (1) is satisfied.

(Expression 1)

$$\sqrt{3} \times \text{Vac} \times \frac{\text{Id}}{\sqrt{2}} \times \lambda c \times \cos\theta = \sqrt{3} \times \text{Vo} \times \frac{\text{Id}}{\sqrt{2}} \times \lambda i \times \cos\phi \qquad \cdots (1)$$

In the above-described expression (1), "Vac" is an effective value of an interphase voltage (hereinafter referred to as an input voltage) of the AC power supply 2. "Vo" is an effective value of an AC voltage (hereinafter referred to as an output voltage) supplied to the AC electric motor 3. "$\theta$" is a power factor angle of a voltage and an electric current input to the current-source converter unit 11. "$\varphi$" is a power factor angle of a voltage and an electric current output from the current-source inverter unit 12.

"$\lambda c$" is a modulation factor of the current-source converter unit 11 (hereinafter referred to as a converter modulation factor). "$\lambda i$" is a modulation factor of the current-source inverter unit 12 (hereinafter referred to as an inverter modulation factor). The converter modulation factor $\lambda c$ and the inverter modulation factor $\lambda i$ are both set in a range of 0 to 1.

From the above-described expression (1), an output voltage Vo can be expressed by the following expression (2). "$\cos\theta$" is a power factor of a voltage and an electric current input to the current-source converter unit 11 (hereinafter referred to as a converter power factor). "$\cos\varphi$" is a power factor of a voltage and an electric current output from the current-source inverter unit 12 (hereinafter referred to as an inverter power factor).

(Expression 2)

$$\text{Vo} = \frac{\text{Vac} \times \lambda c \times \cos\theta}{\lambda i \times \cos\phi} \qquad \cdots (2)$$

Accordingly, in the case where the converter power factor $\cos\theta$ and the inverter power factor $\cos\varphi$ are both 1, saturating the converter modulation factor $\lambda c$ ($\lambda c = 1$) and changing the inverter modulation factor $\lambda i$ allow rising the output voltage Vo more than the input voltage Vac.

However, in the case where the output voltage Vo is raised by changing the inverter modulation factor $\lambda i$ based on a DC voltage instruction Vd*, responsiveness of the voltage may be poor. If, for example, the inverter modulation factor $\lambda i$ is reduced to slightly raise the output voltage Vo, the output current momentarily decreases and then the output voltage Vo decreases. Then, after a delay caused by the DC reactor 13, the DC current Id increases and then the output voltage Vo increases.

Therefore, the controller 16 changes the inverter modulation factor $\lambda i$ in correspondence with the step up/step down ratio VR at the current-source power converting apparatus 1. This step up/step down ratio VR can be expressed by the following expression (3). In the case where the step up/step down ratio VR exceeds 1, a step up operation is performed. On the other hand, in the case where the step up/step down ratio VR is less than 1, the step down operation is performed.

(Expression 3)

$$\text{VR} = \frac{\lambda c}{\lambda i} \qquad \cdots (3)$$

The step up/step down ratio VR can be expressed by the following expression (4) from the above-described expressions (2) and (3). An output voltage instruction Vo* may be used for the output voltage Vo in the expression (4).

(Expression 4)

$$\text{VR} = \frac{\text{Vo} \times \cos\phi}{\text{Vac} \times \cos\theta} \qquad \cdots (4)$$

Use of the above-described expression (4) allows generating the step up/step down ratio VR without basing on the DC voltage instruction Vd* generated by current control. Use of the above-described expression (4) determines the step up/step down ratio VR in a feed forward manner. Accordingly, the inverter modulation factor $\lambda i$ can be controlled independently of the DC voltage instruction Vd*. This improves control responsiveness of the output voltage Vo.

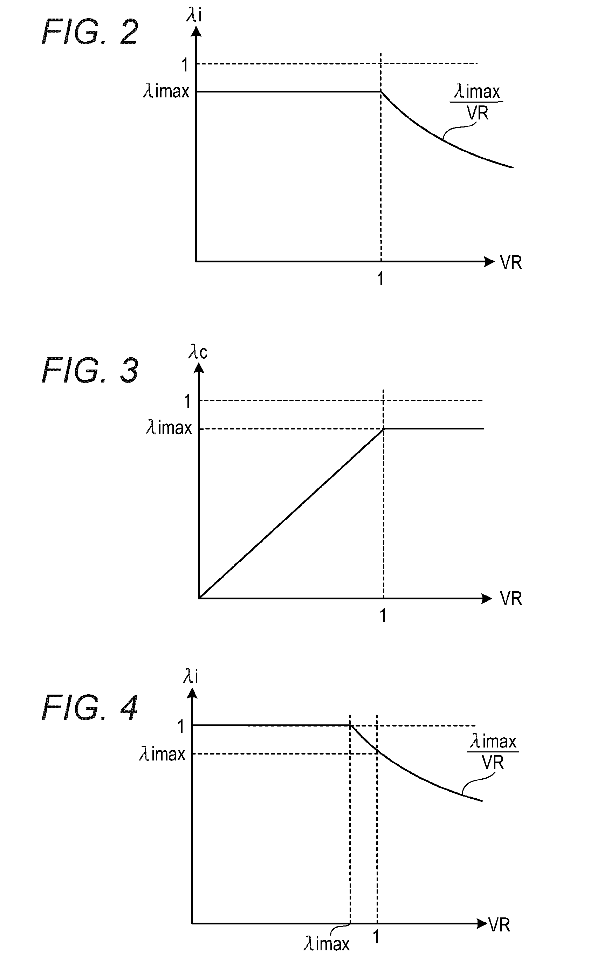

Fig. 2 illustrates an exemplary relationship between the inverter modulation factor $\lambda i$ and the step up/step down ratio VR. As shown in Fig. 2, in the case where the step up/step down ratio VR is 1 or less, for example, the inverter modulation factor $\lambda i$ is set to $\lambda imax$. In the case where the step up/step down ratio VR exceeds 1, the inverter modulation factor $\lambda i$ is set to $\lambda imax/VR$. In the example shown in Fig. 2, the maximum value of the inverter modulation factor $\lambda i$ (hereinafter referred to as an upper limit value $\lambda imax$) is set to less than 1. In view of this, the converter modulation factor $\lambda c$ is not saturated during step up.

The controller 16 changes the converter modulation factor $\lambda c$ in correspondence with the step up/step down ratio VR. Fig. 3 illustrates an exemplary relationship between the converter modulation factor $\lambda c$ and the step up/step down ratio VR. In the case where, for example, the inverter modulation factor $\lambda i$ is set as shown in Fig. 2, the converter modulation factor $\lambda c$ is set as shown in Fig. 3. In the example shown in Fig. 3, in the case where the step up/step down ratio VR is 1 or less, the converter modulation factor $\lambda c$ is set to VR × $\lambda imax$. In a step up operation where the step up/step down ratio VR exceeds 1, the converter modulation factor $\lambda c$ is set to $\lambda imax$.

The converter modulation factor $\lambda c$ is corrected in correspondence with a DC voltage instruction $\Delta Vd*$ generated according to a deviation between a DC current instruction I* and the DC current Id as described below. As described above, the converter modulation factor $\lambda c$ determined by the step up/step down ratio VR is set so as to be not saturated. The converter modulation factor $\lambda c$ is finely adjusted based on the DC voltage instruction $\Delta Vd*$. In the case where the controller 16 changes the converter modulation factor $\lambda c$ according to the step up/step down ratio VR, an output from a current controller 35 is denoted as the DC voltage instruction $\Delta Vd*$. In the case where the controller 16 does not change the converter modulation factor $\lambda c$ according to the step up/step down ratio VR, an output from the current controller 35 is denoted as the DC voltage instruction Vd*.

Thus, changing the inverter modulation factor $\lambda i$ corresponding to the step up/step down ratio VR during step up can improve control responsiveness of the output voltage Vo. The converter modulation factor $\lambda c$ is finely adjusted based on the DC voltage instruction $\Delta Vd*$ without saturating the converter modulation factor $\lambda c$. This further improves control responsiveness of the output voltage Vo.

Now returning to Fig. 1, the configuration of the controller 16 will be described. As shown in Fig. 1, the controller 16 includes a speed calculator 30, an adder 31, a vector controller 33, a subtractor 34, the current controller 35, a converter modulation corrector 36, a converter PWM controller 37, an inverter modulator 38, and an inverter PWM controller 39.

The speed calculator 30 calculates a rotation speed $\omega r$ of the AC electric motor 3 from rotation position information Pfb of the AC electric motor 3 output from a position detector 4. The vector controller 33 calculates proportional-integration on a deviation between the rotation speed $\omega r$, which is output from the speed calculator 30, and a rotation speed instruction $\omega r*$. Accordingly, the vector controller 33 generates a torque instruction $\tau*$.

Then, the vector controller 33 generates the DC current instruction I*, a phase instruction $\varphi i*$ of an output current, and a frequency instruction $\omega*$ of an output current based on the generated torque instruction $\tau*$ and the rotation speed $\omega r$ output from the speed calculator 30.

The vector controller 33 obtains the converter power factor $\cos\theta$, the inverter power factor $\cos\varphi$, the input voltage Vac, and the output voltage Vo. Then, the vector controller 33 calculates the step up/step down ratio VR based on the above-described expression (4). Specifically, the vector controller 33 obtains the input voltage Vac and a phase $\theta c$ of the input voltage based on input voltages Vr, Vs, and Vt output from the voltage detection unit 14. Then, the vector controller 33 obtains the converter power factor $\cos\theta$ from the phase $\theta c$ of the input voltage and a phase of an input current instruction (not shown).

The vector controller 33 obtains a phase $\varphi v$ of the output voltage from the rotation position information Pfb output from the position detector 4. The vector controller 33 obtains the inverter power factor $\cos\varphi$ from this phase $\varphi v$ and the phase instruction $\varphi i*$ of the output current. Then, the vector controller 33 calculates the step up/step down ratio VR based on the above-described expression (4).

The vector controller 33 as a converter modulator obtains the converter modulation factor $\lambda c$ from the step up/step down ratio VR. Specifically, the vector controller 33 obtains the converter modulation factor $\lambda c$ from the step up/step down ratio VR based on a calculation expression or a table with the relationship shown in Fig. 3.

The vector controller 33 also can obtain the output voltage instruction Vo* based on, for example, the rotation speed $\omega r$ or the rotation speed instruction $\omega r*$, and based on the torque instruction $\tau*$, and/or a motor electric constant of the AC electric motor 3 incorporated in the vector controller 33 as necessary. The vector controller 33 may obtain the output voltage Vo by detecting voltages of the output terminals Tu, Tv, and Tw by a voltage detector. Alternatively, the AC electric motor 3 may be controlled by a controller that performs V/f control, which controls a ratio between a voltage and a frequency, instead of the vector controller 33, which performs the above-described vector control.

The subtractor 34 subtracts a DC current Id detected by the current detection unit 15 from the DC current instruction I* output from the vector controller 33 and outputs the result to the current controller 35. The current controller 35 calculates proportional-integration on a deviation between the DC current instruction I* and the DC current Id. Accordingly, the current controller 35 generates the DC voltage instruction ΔVd* that eliminates the deviation between the DC current instruction I* and the DC current Id.

The converter modulation corrector 36 obtains a converter modulation factor correction value Δλc from the DC voltage instruction ΔVd*.

The adder 31 adds the converter modulation factor correction value Δλc output from the converter modulation corrector 36 to the converter modulation factor λc output from the vector controller 33. This corrects the converter modulation factor λc. The adder 31 outputs the corrected converter modulation factor λc to the converter PWM controller 37.

The converter PWM controller 37 generates the PWM signals S1a to S1f. The converter PWM controller 37 changes pulse widths of the PWM signals S1a to S1f according to the phase θc of the input voltage, which is obtained from the input voltages Vr, Vs, and Vt, the preliminary-specified converter power factor cosθ, and the converter modulation factor λc. The PWM signals S1a to S1f are, for example, generated by a known PWM control method for current-source converter.

The inverter modulator 38 obtains the inverter modulation factor λi from the step up/step down ratio VR. Specifically, the inverter modulator 38 obtains the inverter modulation factor λi from the step up/step down ratio VR based on the calculation expression or the table with the relationship shown in Fig. 2.

In the case where, for example, the step up/step down ratio VR is 1 or less as shown in Fig. 2, the inverter modulator 38 outputs λimax as the inverter modulation factor λi to the inverter PWM controller 39. In the case where, for example, the step up/step down ratio VR exceeds 1 as shown in Fig. 2, the inverter modulator 38 outputs λimax/VR as the inverter modulation factor λi to the inverter PWM controller 39.

A small upper limit value λimax of the inverter modulation factor λi increases the DC current Id. This increases conduction loss in the current-source power converting apparatus 1. Accordingly, the upper limit value λimax is preferred to be set to be an optimum value (for example, around 0.95), considering a current control property.

The inverter PWM controller 39 generates the PWM signals S2a to S2f. The inverter PWM controller 39 changes the pulse widths of the PWM signals S2a to S2f in correspondence with the phase instruction φi* and the frequency instruction ω*, which are output from the vector controller 33, and the inverter modulation factor λi, which is output from an inverter modulator 28. The PWM signals S2a to S2f are, for example, generated by a known PWM control method for current-source inverter.

Thus, the current-source power converting apparatus 1 according to the first embodiment can obtain the inverter modulation factor λi from the step up/step down ratio VR. The step up/step down ratio VR is determined without being based on the DC voltage instruction ΔVd* generated by current control in a feed forward manner. Consequently, compared with the case where the converter modulation factor λc is controlled by only the DC voltage instruction Vd*, control responsiveness of the output voltage Vo can be substantially improved.

In the step up operation where the step up/step down ratio VR exceeds 1, the converter modulation factor λc is restricted to be λimax or less by the vector controller 33 based on the relationship of the power balancing state shown in the above-described expression (1). Accordingly, when the output voltage Vo is slightly raised, the converter modulation factor λc becomes higher than λimax by the DC voltage instruction ΔVd*. This allows raising the output voltage Vo irrespective of response from the DC reactor 13. As a result, control responsiveness of the output voltage Vo is further improved.

As described above, the relationship between the step up/step down ratio VR and the inverter modulation factor λi in the current-source power converting apparatus 1 may be the relationship as shown in Fig. 2. However, the relationship between the step up/step down ratio VR and the inverter modulation factor λi is not limited to this. The relationship between the step up/step down ratio VR and the inverter modulation factor λi in a step down operation may be switched from the relationship shown in Fig. 2 to the relationship shown in Fig. 4, for example. Fig. 4 illustrates another relationship between the inverter modulation factor λi and the step up/step down ratio VR.

As described above, a small inverter modulation factor λi increases the DC current Id, thus increasing the conduction loss in the current-source power converting apparatus 1. Therefore, in the current-source power converting apparatus 1, as the inverter modulation factor λi, one of the upper limit value λimax or 1.0 can be selected. In the step down operation with the step up/step down ratio VR of less than 1, for example, the inverter modulation factor λi is set to 1. This allows reducing the conduction loss. When the relationship shown in Fig. 4 is selected, λimax shown in Fig. 3 is set, for example, to 1.

With the above-described current-source power converting apparatus 1, the step up/step down ratio VR is calculated considering the inverter power factor cosφ. This allows inhibiting an increase in conduction loss in the case where, for example, the AC electric motor 3 drives a load with poor power factor, such as an induction electric motor.

That is, in the case where the AC electric motor 3 is an induction electric motor, the inverter power factor cosφ is substantially changed in correspondence with the load power. In view of this, the step up/step down ratio VR is calculated considering the inverter unit power factor cosφ. Otherwise, the inverter modulation factor λi is substantially reduced, causing the step up operation. In this case, decreasing the converter modulation factor λc adjusts the output voltage Vo. As a result, the DC current Id is increased, thus increasing the conduction loss. On the other hand, with above-described current-source power converting apparatus 1, the step up/step down ratio VR is calculated considering the inverter power factor cosφ. In view of this, an increase in conduction loss can be reduced.

With the above-described current-source power converting apparatus 1, the step up/step down ratio VR is calculated considering the converter power factor cosθ. Accordingly, even if the converter power factor cosθ changes, the step up/step down ratio VR can be accurately calculated and the step up operation can be reliably performed. The vector controller 33 does not calculate these power factors in the case where a change in the inverter power factor cosφ and/or the converter power factor cosθ is small. In this case, the vector controller 33 can calculate the step up/step down ratio VR by multiplying a ratio of the output voltage Vo to the input voltage Vac by a fixed coefficient. Thus, a load of calculation of the vector controller 33 can be reduced.

With the above-described current-source power converting apparatus 1, the vector controller 33 calculates the step up/step down ratio VR. However, this should not be construed in a limiting sense. The current-source power converting apparatus 1 may include a step up/step down ratio calculator, which calculates the step up/step down ratio VR, separately from the vector controller 33.

(Second Embodiment)

Next, a current-source power converting apparatus according to the second embodiment will be described. In the first embodiment, the current-source power converting apparatus 1 that converts an AC power supplied from the AC power supply 2 into a desired AC power is described. In the second embodiment, the current-source power converting apparatus that converts a DC power supplied from a DC power supply into a desired AC power will be described. The following description focuses on differences from the current-source power converting apparatus 1 according to the first embodiment. Components with similar function to the components of the first embodiment are described where like reference numerals designate corresponding or identical elements throughout the description that follows.

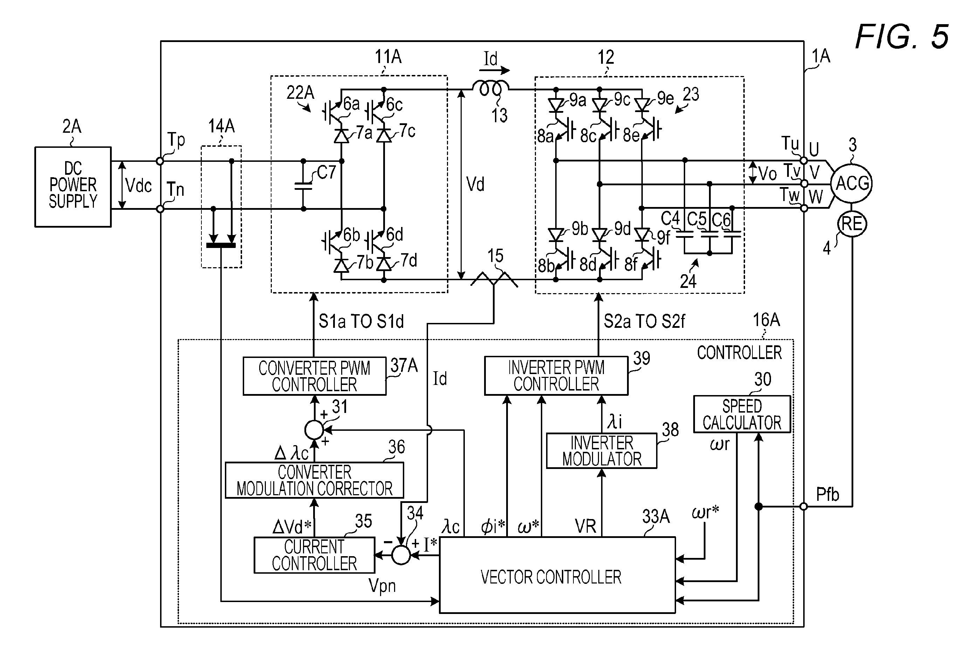

Fig. 5 illustrates a configuration of a current-source power converting apparatus 1A according to the second embodiment. The current-source power converting apparatus 1A converts a DC power supplied from a DC power supply 2A into a desired AC power and outputs the AC power to the AC electric motor 3.

As shown in Fig. 5, the current-source power converting apparatus 1A according to the second embodiment includes a P phase terminal Tp and an N phase terminal Tn. These input terminals Tp and Tn are respectively coupled to a positive electrode and a negative electrode of the DC power supply 2A. The current-source power converting apparatus 1A includes a current-source converter unit 11A, a current-source inverter unit 12, the DC reactor 13, a voltage detection unit 14A, the current detection unit 15, and a controller 16A.

A DC power supplied from the DC power supply 2A is converted into a DC power by the current-source converter unit 11A. The DC current is output to the current-source inverter unit 12 via the DC reactor 13. The current-source converter unit 11A includes a capacitor C7 and a bridge circuit 22A. The bridge circuit 22A includes a series circuit that includes the switching elements 6a to 6d and the diodes 7a to 7d. These series circuits are coupled in full bridge topology.

The capacitor C7 is coupled between the input terminal Tp and the input terminal Tn. The bridge circuit 22A is coupled between the input terminals Tp and Tn and the current-source inverter unit 12. As the switching elements 6a to 6d, for example, a semiconductor device such as an IGBT or MOSFET is used. In the case where the switching elements 6a to 6d are reverse blocking IGBT, the diodes 7a to 7d need not to be disposed.

The voltage detection unit 14A is disposed between the DC power supply 2A and the current-source converter unit 11A. The voltage detection unit 14A detects a voltage Vpn (hereinafter referred to as an input voltage Vpn) of the DC power supply 2A. The detection result is output to the controller 16A.

The controller 16A generates the PWM signals S1a to S1d and outputs the PWM signals S1a to S1d to the current-source converter unit 11A. The switching elements 6a to 6d of the current-source converter unit 11A are respectively ON/OFF controlled by the PWM signals S1a to S1d. The PWM signals S1a to S1d are, for example, generated by a known PWM control method for current-source converter.

Here, suppose that an input power to the current-source converter unit 11A and an output power from the current-source inverter unit 12 are equaled due to power balance. In this case, the following expression (5) is satisfied.

(Expression 5)

$$Vpn \times Id \times \lambda c = \sqrt{3} \times Vo \times \frac{Id}{\sqrt{2}} \times \lambda i \times \cos\phi \qquad \cdots (5)$$

In the above-described expression (5), "$\lambda c$" is a modulation factor of the current-source converter unit 11A (hereinafter referred to as a converter modulation factor $\lambda c$).

From the above-described expression (5), the output voltage Vo can be expressed by the following expression (6).

(Expression 6)

$$Vo = \frac{\sqrt{2}}{\sqrt{3}} \cdot \frac{Vpn \times \lambda c}{\lambda i \times \cos\phi} \qquad \cdots (6)$$

Accordingly, in the case where the inverter power factor $\cos\varphi$ is 1, saturating the converter modulation factor $\lambda c$ and changing the inverter modulation factor $\lambda i$ increases the output voltage Vo by the current-source inverter unit 12.

The step up/step down ratio VR can be expressed by the following expression (7) from the above-described expressions (3) and (6). The output voltage instruction Vo* may be used for the output voltage Vo in the expression (7).

(Expression 7)

$$VR = \frac{\sqrt{3}}{\sqrt{2}} \cdot \frac{Vo \times \cos\phi}{Vpn} \qquad \cdots (7)$$

The controller 16A, similarly to the process by the controller 16, sets the maximum value of the inverter modulation factor $\lambda i$ to the upper limit value $\lambda i max$, which is less than 1. Accordingly, the converter modulation factor $\lambda c$ is not saturated during step up. Fig. 2 illustrates an exemplary relationship between the inverter modulation factor $\lambda i$ and the step up/step down ratio VR.

As shown in Fig. 5, the controller 16A includes the speed calculator 30, the adder 31, a vector controller 33A, the subtractor 34, the current controller 35, the converter modulation corrector 36, a converter PWM controller 37A, the inverter modulator 38, and the inverter PWM controller 39.

The vector controller 33A, similarly to the vector controller 33, generates the DC current instruction I*, the phase instruction $\varphi i*$, and the frequency instruction $\omega*$ based on the torque instruction $\tau*$ and the rotation speed $\omega r$.

Specifically, the vector controller 33A obtains the input voltage Vpn from the voltage detection unit 14A. The vector controller 33A, similarly to the vector controller 33, obtains the output voltage Vo and the inverter power factor $\cos\varphi$. Then, the vector controller 33A calculates the step up/step down ratio VR based on the above-described expression (7).

Thus, the current-source power converting apparatus 1A according to the second embodiment also can obtain the inverter modulation factor $\lambda i$ from the step up/step down ratio VR, similarly to the the current-source power converting apparatus 1 according to the first embodiment. The step up/step down ratio VR is determined without being based on the DC voltage instruction $\Delta Vd*$ generated by current control in a feed forward manner.

Moreover, the converter modulation factor $\lambda c$ can be controlled even during step up by avoiding saturation of the converter modulation factor $\lambda c$ during step up. This improves control responsiveness of the output voltage Vo.

The vector controller 33A, similarly to the above-described vector controller 33, for example, can switch the relationship between the step up/step down ratio VR and the inverter modulation factor $\lambda i$ during step down conversion, from the relationship shown in Fig. 2 to the relationship shown in Fig. 4. In this case, $\lambda i max$ shown in Fig. 3 is, for example, set to 1.

When the input power and the output power are balanced, the converter modulation factor $\lambda c$ changes in correspondence with the step up/step down ratio VR. In this case, the controller 16A does not have to directly change the converter modulation factor $\lambda c$ in correspondence with the step up/step down ratio VR. In this case, the converter modulation factor $\lambda c$ may be controlled by the DC voltage instruction Vd* output from the current controller 35. Even in this case, the inverter modulation factor $\lambda i$ is controlled independently from the DC voltage instruction Vd*. Accordingly, control responsiveness of the output voltage Vo can be improved.

With the above-described the current-source power converting apparatus 1A, the vector controller 33A calculates the step up/step down ratio VR. However, this should not be construed in a limiting sense. The current-source power converting apparatus 1A may include a step up/step down ratio calculator, which calculates the step up/step down ratio VR, separately from the vector controller 33A.

(Third Embodiment)

Next, a current-source power converting apparatus according to a third embodiment will be described. In the second embodiment, the current-source power converting apparatus 1A that converts a power supplied from a DC power supply 2B into a desired AC power is described. In the third embodiment, the current-source power converting apparatus that can perform a regeneration operation in addition to a power running operation will be described. The following description focuses on differences from the current-source power converting apparatuses 1 and 1A according to the first and second embodiments. Components with similar function to the components of the first and the second embodiments are described where like reference numerals designate corresponding or identical elements throughout the description that follows.

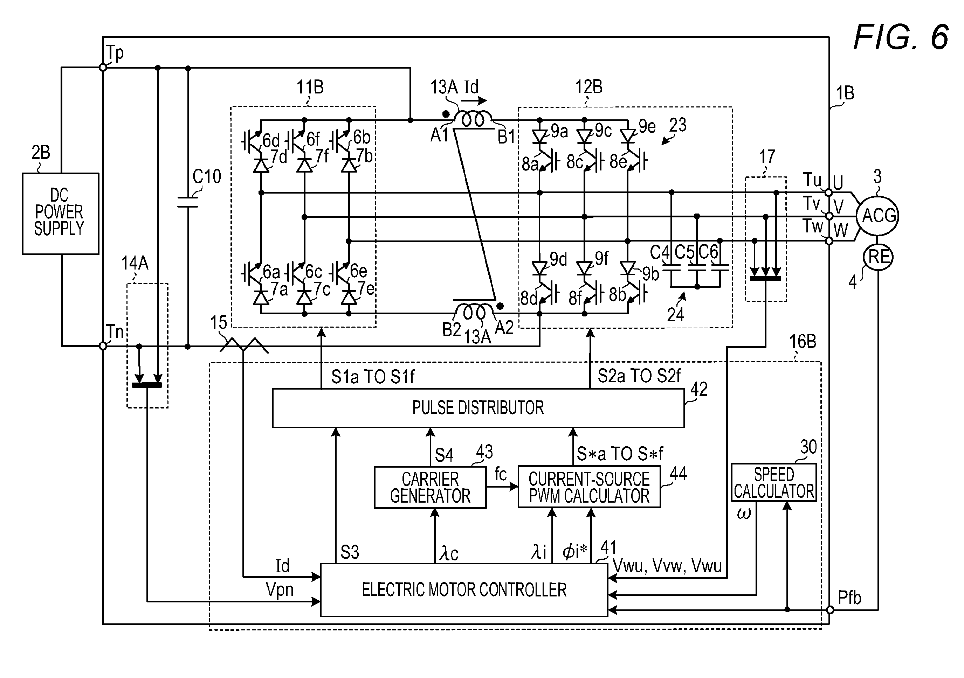

Fig. 6 illustrates a configuration of a current-source power converting apparatus 1B according to the third embodiment. The current-source power converting apparatus 1B performs the power running operation and the regeneration operation. The power running operation converts a DC power supplied from the DC power supply 2B into a desired AC power and outputs the AC power to the AC electric motor 3. The regeneration operation converts a regenerative electric power from the AC electric motor 3 into a DC power and outputs the DC power to the DC power supply 2B.

As shown in Fig. 6, the current-source power converting apparatus 1B according to the third embodiment includes a current-source converter unit 11B, a current-source inverter unit 12B, a coupled DC reactor 13A (coupled inductor), voltage detection unit 14A, the current detection unit 15, a controller 16B, a voltage detection unit 17, and a capacitor C10. The capacitor C10 is coupled between the input terminal Tp and the input terminal Tn.

The power running operation converts the DC power supplied from the DC power supply 2B into the AC power by the coupled DC reactor 13A and the current-source inverter unit 12B. This AC power is output to the AC electric motor 3. The regeneration operation converts the regenerative electric power from the AC electric motor 3 into the DC power by the coupled DC reactor 13A and the current-source converter unit 11B. The DC power is output to the DC power supply 2B.

The current-source converter unit 11B includes a series circuit that includes the switching elements 6a to 6f and the diodes 7a to 7f. These series circuits are three-phase bridge coupled. As the switching elements 6a to 6f, for example, a semiconductor device such as an IGBT or MOSFET is used. In the case where the switching elements 6a to 6f are reverse blocking IGBT, the diodes 7a to 7f need not to be disposed.

The current-source inverter unit 12B includes a series circuit that includes the switching elements 8a to 8f and the diodes 9a to 9f. These series circuits are three-phase bridge coupled. As the switching elements 8a to 8f, for example, a semiconductor device such as an IGBT or MOSFET is used. In the case where the switching elements 8a to 8f are reverse blocking IGBT, the diodes 9a to 9f need not to be disposed.

The three-phase AC terminals of the current-source converter unit 11B and the current-source inverter unit 12B are coupled to the AC electric motor 3 via the respective output terminals Tu, Tv, and Tw. The positive electrode side of the current-source converter unit 11B is coupled to the positive electrode of the DC power supply 2B via the P phase terminal Tp. The negative electrode side of the current-source converter unit 11B is coupled to the negative electrode of the DC power supply 2B via the N phase terminal Tn. Similarly, the positive electrode side of the current-source inverter unit 12B is coupled to the negative electrode of the DC power supply 2B via the N phase terminal Tn. The negative electrode side of the current-source inverter unit 12B is coupled to the positive electrode of the DC power supply 2B via the P phase terminal Tp.

The coupled DC reactor 13A includes a first winding wire A1-B1 and a second winding wire A2-B2. The core and the number of windings of both winding wires are the same with one another. The winding wire A1-B1 and the second winding wire A2-B2 are coupled in the direction indicated by the dot markings shown in Fig. 6. One end A1 of the first winding wire A1-B1 is coupled to the positive electrode of the current-source converter unit 11B. The other end B1 of the first winding wire A1-B1 is coupled to the negative electrode of the current-source inverter unit 12B. One end B2 of the second winding wire A2-B2 is coupled to the negative electrode of the current-source converter unit 11B. The other end A2 of the first winding wire A1-B1 is coupled to the positive electrode of the current-source inverter unit 12B.

The voltage detection unit 17 is disposed between the AC electric motor 3 and the current-source inverter unit 12B. The voltage detection unit 17 detects the voltages Vu, Vv, and Vw (hereinafter referred to as output voltages Vu, Vv, and Vw) of the U phase, the V phase, and the W phase of the AC electric motor 3. The detection result is output to the controller 16B.

The controller 16B generates the PWM signals S1a to S1f and outputs the PWM signals S1a to S1f to the current-source converter unit 11B. The PWM signals S1a to S1f respectively on/off control the switching elements 6a to 6f of the current-source converter unit 11B. The controller 16B generates the PWM signals S2a to S2f and outputs the PWM signals S2a to S2f to the current-source inverter unit 12B. The PWM signals S1a to S1f respectively on/off control the switching elements 8a to 8f of the current-source inverter unit 12B.

The controller 16B includes an electric motor controller 41, a pulse distributor 42, a carrier generator 43, and a current-source PWM calculator 44. The electric motor controller 41 generates the converter modulation factor λc, the inverter modulation factor λi, and the phase instruction φi* of the output current based on the DC current Id, the input voltage Vpn, the output voltages Vu, Vv, and Vw, the rotation speed ω, and the rotation position information Pfb.

The controller 16B, similarly to the above-described controllers 16 and 16A, obtains the inverter modulation factor λi from the step up/step down ratio VR. The converter modulation factor λc is set so as not to be saturated during step up.

The electric motor controller 41, for example, includes one of the vector controllers 33 and 33A, the adder 31, the vector controllers 33 and 33A, the current controller 35, the converter modulation corrector 36, and the inverter modulator 38. Generation of the converter modulation factor λc, the inverter modulation factor λi, and the phase instruction φi* of output current by the controller 16B is similar to the controllers 16 and 16A.

The electric motor controller 41 controls the DC current instruction I* such that the output voltages Vu, Vv, and Vw may become a desired voltage. The electric motor controller 41 generates and outputs a power running-regeneration signal S3 based on the torque instruction τ* and/or an input detection signal. The DC voltage instruction Vd* has a positive polarity in power running and a negative polarity in regeneration. The electric motor controller 41 outputs the power running-regeneration signal S3 in correspondence with the polarity of the DC voltage instruction Vd*.

The pulse distributor 42 distributes drive signals S*a to S*f to the current-source converter unit 11B as the PWM signals S1a to S1f, and to the current-source inverter unit 12B as the PWM signals S2a to S2f, based on the power running-regeneration signal S3 and a carrier period determination signal S4. The details of this distribution method will be described below.

The carrier generator 43 makes fall time and rise time of a carrier waveform for one cycle be in correspondence with λc × Tc and (1 - λc) × Tc, respectively. Accordingly, the carrier generator 43 generates a triangular-shaped unbalanced carrier waveform fc that yields a value of 0 to 1. The carrier generator 43 outputs the carrier period determination signal S4 indicating ON in the period of λc × Tc of the unbalanced carrier waveform fc. Meanwhile, the carrier generator 43 outputs the carrier period determination signal S4 indicating OFF in the period of (1 - λc) × Tc of the unbalanced carrier waveform fc. "Tc" indicates a carrier cycle.

The current-source PWM calculator 44, first, calculates time of a current vector to be output from the inverter modulation factor λi and the phase instruction φi* of the output current. In a PWM control by the current-source PWM calculator 44, for example, one zero current vector Io and two current vectors Ii and Ii+1, whose value are other than zero, are used. The current vectors Io, Ii, and Ii+1 are adjacent to the current instruction vector with values of the inverter modulation factor λi and the phase instruction φi* of the output current. In this case, output time of Io is denoted as Tz, output time of Ii is denoted as Ti, and output time of Ii+1 is denoted as Ti+1. An angle formed by the current instruction vector and the current vector Ii is denoted as θ. Furthermore, the PWM period is denoted as Ts. In this case, Tz, Ti, and Ti + 1 can be calculated by the expression (8).

(Expression 8)

$$T_i = Ts \times \lambda i \times \sin\left(\frac{\pi}{3} - \theta\right)$$
$$T_{i+1} = Ts \times \lambda i \times \sin(\theta) \qquad \cdots (8)$$
$$Tz = Ts - T_i - T_{i+1}$$

PWM pulse time instructions To and T1, which are compared with the unbalanced carrier waveform fc, are normalized such that the carrier waveform may yield 0 to 1. That is, the time instructions To and T1 can be calculated by the expression (9).

(Expression 9)

$$T1 = \frac{T_i}{Ts}$$
$$To = \frac{T_i + T_{i+1}}{Ts} \qquad \cdots (9)$$

Thus, the PWM pulse time instructions To and T1 are compared with the unbalanced carrier waveform fc. This generates the drive signals S*a to S*f to output the corresponding current vectors Io, Ii, and Ii + 1.

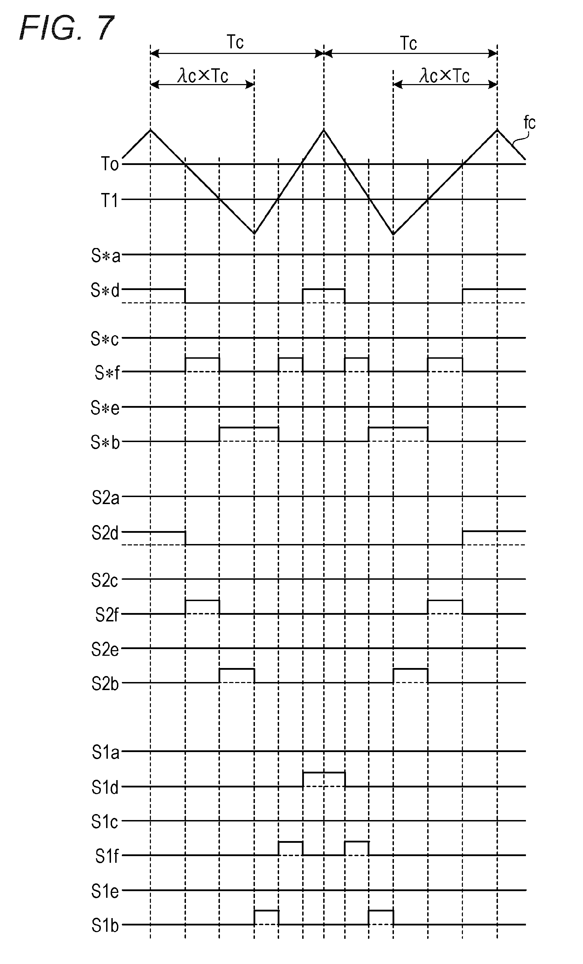

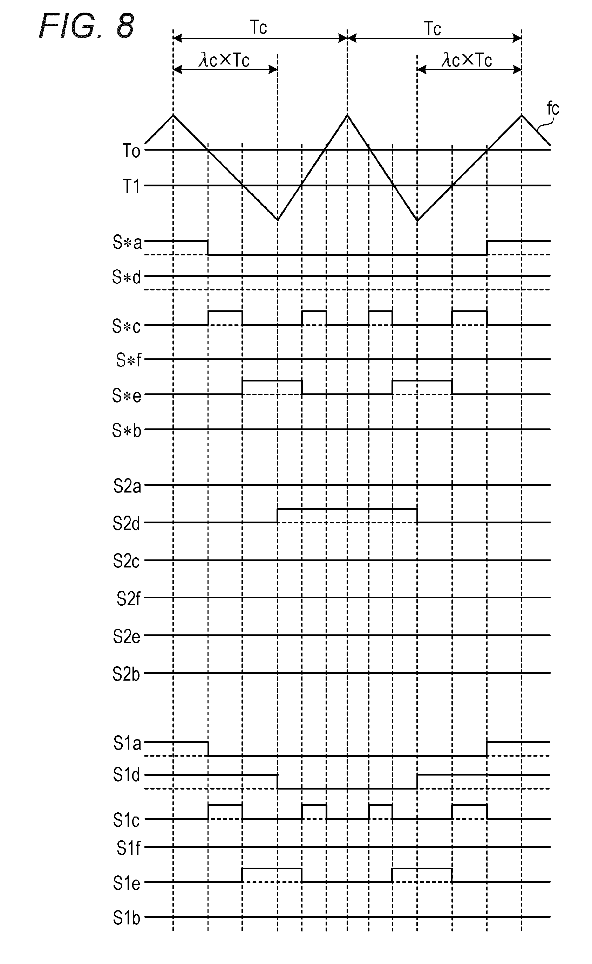

Next, an exemplary pulse generation by the pulse distributor 42 will be described by referring to Figs. 7 and 8. Fig. 7 illustrates the PWM signals S1a to S1f and S2a to S2f output during the power running operation. Fig. 8 illustrates the PWM signals S1a to S1f and S2a to S2f output during the regeneration operation. In the pulse signals in Figs. 7 and 8, Low indicates OFF and High indicates ON.

In the power running operation, as shown in Fig. 7, in the $\lambda c \times Tc$ period of the unbalanced carrier waveform fc, the drive signals S*a to S*f are distributed to the PWM signals S2a to S2f. In this case, the PWM signals S1a to S1f are all turned OFF. In the $(1 - \lambda c) \times Tc$ period of the unbalanced carrier waveform fc, the drive signals S*b, S*d, and S*f are distributed to the PWM signals S1b, S1d, and S1f. In this case, the PWM signals S2b, S2d, and S2f are turned OFF.

In the regeneration operation, as shown in Fig. 8, in the $\lambda c \times Tc$ period of the unbalanced carrier waveform fc, the drive signals S*a to S*f are distributed to the PWM signals S1a to S1f. In this case, the PWM signals S2a to S2f are all turned OFF. In the $(1 - \lambda c) \times Tc$ period of the unbalanced carrier waveform fc, the drive signals S*a to S*f are distributed to the PWM signals S2b, S2d, and S2f. The PWM signals S1b, S1d, and S1f are turned OFF.

As described above, the current-source power converting apparatus 1B with the configuration shown in Fig. 6 also can obtain the inverter modulation factor $\lambda i$ from the step up/step down ratio VR, similarly to the the current-source power converting apparatuses 1 and 1A according to the first and second embodiments. The step up/step down ratio VR is determined without being based on the DC voltage instruction $\Delta Vd^*$ generated by current control in a feed forward manner. Consequently, control responsiveness of the output voltage Vo can be improved. Moreover, the converter modulation factor $\lambda c$ can be controlled even during step up by avoiding saturation of the converter modulation factor $\lambda c$ during step up. This improves control responsiveness of the output voltage Vo.

The current-source converter unit 11B and the current-source inverter unit 12B need not to be a three-phase bridge circuit as shown in Fig. 6. The current-source converter unit 11B and the current-source inverter unit 12B, for example, may be bidirectional switches that couple the respective input terminals Tp and Tn and the respective output terminals Tu, Tv, and Tw.

The current-source power converting apparatus of this disclosure may be the following first to eighth current-source power converting apparatuses.

A first current-source power converting apparatus includes: a converter unit configured to convert an AC or DC voltage input from a power supply into a predetermined DC voltage; an inverter unit configured to convert a DC voltage supplied from the converter unit via a DC reactor into an AC voltage and outputs the AC voltage; and a controller configured to control the inverter unit at a modulation factor in correspondence with a step up/step down ratio based on a ratio of an output voltage from the inverter unit to an input voltage from the power supply.

A second current-source power converting apparatus according to the first current-source power converting apparatus is configured as follows. The controller is configured to control the converter unit at a modulation factor in correspondence with a DC voltage instruction generated based on a deviation between a DC current output from the converter unit and a DC current instruction.

A third current-source power converting apparatus according to the first current-source power converting apparatus is configured as follows. The controller is configured to set a modulation factor of the converter unit to a value less than 1. The controller is configured to obtain a modulation factor correction value in correspondence with a DC voltage instruction generated based on a deviation between a DC current output from the converter unit and a DC current instruction. The controller is configured to correct the modulation factor of the converter unit by the obtained modulation factor correction value.

A fourth current-source power converting apparatus according to the first or second current-source power converting apparatus is configured as follows. The controller is configured to control the converter unit while restricting a modulation factor of the converter unit to be less than 1.

A fifth current-source power converting apparatus according to any one of the above-described first to fourth current-source power converting apparatuses is configured as follows. The controller is configured to obtain a modulation factor of the inverter unit from a table or a calculation expression that associates the step up/step down ratio and the modulation factor.

A sixth current-source power converting apparatus according to the fifth current-source power converting apparatus is configured as follows. The controller is configured to select one of a plurality of the tables or the calculation expression. The controller is configured to obtain a modulation factor of the inverter unit from the selected tables or calculation expression.

A seventh current-source power converting apparatus according to any one of the above-described first to sixth current-source power converting apparatuses is configured as follows. The controller is configured to integrate a power factor of the inverter unit to a ratio of the output voltage to the input voltage to obtain the step up/step down ratio.

An eighth current-source power converting apparatus according to any one of the above-described first to seventh current-source power converting apparatuses is configured as follows. The controller is configured to divide a ratio of the output voltage to the input voltage by a power factor of the converter unit to obtain the step up/step down ratio.

Additional advantages and modifications will readily occur to those skilled in the art. Therefore, the disclosure in its broader aspects is not limited to the specific details and representative embodiments shown and described herein. Accordingly, various modifications may be made without departing from the spirit or scope of the general inventive concept as defined by the appended claims and their equivalents.

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

**Claims**

1. A current-source power converting apparatus (1, 1A, 1B), comprising:

   a converter unit (11, 11A, 11B) configured to convert an AC or DC voltage input from a power supply (2, 2A, 2B) into a predetermined DC voltage;
   an inverter unit (12, 12B) configured to convert a DC voltage supplied from the converter unit (11, 11A, 11B) via a DC reactor (13, 13A) into an AC voltage and output the AC voltage; and
   a controller (16, 16A, 16B) configured to control the inverter unit (12, 12B) at a modulation factor in correspondence with a step up/step down ratio based on a ratio of an output voltage from the inverter unit (12, 12B) to an input voltage from the power supply (2, 2A, 2B).

2. The current-source power converting apparatus (1, 1A, 1B) according to claim 1, wherein
   the controller (16, 16A, 16B) is configured to control the converter unit (11, 11A, 11B) at a modulation factor in correspondence with a DC voltage instruction generated based on a deviation between a DC current output from the converter unit (11, 11A, 11B) and a DC current instruction.

3. The current-source power converting apparatus (1, 1A) according to claim 1, wherein
   the controller (16, 16A) is configured to obtain a modulation factor of the converter unit (11, 11A, 11B) in correspondence with the step up/step down ratio, and obtain a modulation factor correction value in correspondence with a DC voltage instruction generated based on a deviation between a DC current output from the converter unit (11, 11A) and a DC current instruction to correct the modulation factor of the converter unit (11,11A) by the obtained modulation factor correction value.

4. The current-source power converting apparatus (1, 1A, 1B) according to claim 2 or 3, wherein
   the controller (16, 16A, 16B) generates the DC voltage instruction by performing a proportional integral operation on a deviation between the DC current instruction and the DC current.

5. The current-source power converting apparatus (1, 1A, 1B) according to claim 2 or 3, wherein
   the controller (16, 16A, 16B) is configured to control the converter unit (11, 11A, 11B) while setting the modulation factor of the converter unit (11, 11A, 11B) to be less than 1.

6. The current-source power converting apparatus (1, 1A, 1B) according to any one of claims 1 to 5, wherein
   the controller (16, 16A, 16B) is configured to obtain the modulation factor of the inverter unit (12, 12B) based on a table or an calculation expression that associates the step up/step down ratio and the modulation factor of the inverter unit (12, 12B).

7. The current-source power converting apparatus (1, 1A, 1B) according to any one of claims 2 to 6, wherein
   the controller (16, 16A, 16B) is configured to obtain the modulation factor of the converter unit (11, 11A, 11B) based on a table or an calculation expression that associates the step up/step down ratio and the modulation factor of the converter unit (11, 11A, 11B).

8. The current-source power converting apparatus (1, 1A, 1B) according to any one of claims 1 to 7, wherein
   the controller (16, 16A, 16B) is configured to integrate a power factor of the inverter unit (12, 12B) to a ratio of the output voltage to the input voltage to obtain the step up/step down ratio.

9. The current-source power converting apparatus (1, 1A, 1B) according to any one of claims 1 to 8, wherein
   the controller (16, 16A, 16B) is configured to divide a ratio of the output voltage to the input voltage by a power factor of the converter unit (11, 11A, 11B) to obtain the step up/step down ratio.

# FIG. 1

*FIG. 2*

*FIG. 3*

*FIG. 4*

FIG. 5

*FIG. 6*

EP 2 731 242 A2

*FIG. 7*

*FIG. 8*

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2012246751 A
- JP 2206385 A